# FASCICULE DE BREVET EUROPEEN

(11) **EP 0 773 692 B1**
(45) Date de publication et mention de la délivrance du brevet: **10.05.2000**
(21) Numéro de dépôt: 96202988.0
(22) Date de dépôt: 28.10.1996
(51) Int. Cl.: H04N 9/64, H04N 9/68

(54) **Amplificateur compresseur video**
Komprimierender Videoverstärker
Video compressor amplifier

(30) Priorité: 08.11.1995 FR 9513223
(43) Date de publication de la demande: 14.05.1997
(73) Titulaire: Koninklijke Philips Electronics N.V., 5621 BA Eindhoven (NL)
(72) Inventeur: Heber-Suffrin, Frédéric, 75008 Paris (FR); Vilard, Philippe, 75008 Paris (FR)
(74) Mandataire: Charpail, François

(56) Documents cités:
- EP-A- 0 230 924
- US-A- 4 118 731
- US-A- 5 299 000

## Description

La présente invention concerne un amplificateur vidéo pour un appareil d'affichage d'images définies par des signaux de couleur, comprenant, pour chacun des signaux de couleur, un circuit d'amplification dont le gain est limité par une contre-réaction qui prend une valeur plus élevée lorsque la tension du signal dépasse une tension de seuil donnée, et un circuit dit de définition, commun pour l'ensemble des couleurs, pour établir une valeur de référence du seuil.

Elle concerne également un appareil d'affichage d'images.

Le procédé, appelé "soft clipping", selon lequel le gain est progressivement ("soft") limité ("clipping") dans un amplificateur vidéo, est utilisé entre autres pour éviter des variations de contraste d'une image à une autre lorsque le contenu présente des variations brusques (par exemple lorsque des sous-titres apparaissent ou disparaissent). Le "soft clipping" atténue l'intensité du blanc et la modulation dans les blancs, et empêche la saturation des circuits d'amplification vidéo.

Un processeur vidéo comprenant, pour trois couleurs, trois circuits d'amplification, dont le gain est limité par une contre-réaction qui prend une valeur plus élevée lorsque la tension du signal dépasse une tension de seuil donnée, est connu du document US-5,299,000. Le processeur selon ce document comporte un circuit de détection de seuil commun pour les trois couleurs, qui applique la même contre-réaction en même temps aux trois circuits d'amplification. Un tel processeur présente l'inconvénient qu'un même seuil de "clipping" pour les trois circuits d'amplification conduit à une coloration des blancs dans certaines circonstances.

Pour répondre à cet inconvénient, il a été proposé d'utiliser trois circuits de définition de seuil distincts, un pour chacune des couleurs. Néanmoins cette façon de faire n'est toujours pas satisfaisante, car dans le cas d'une couleur relativement saturée, c'est-à-dire quand un signal de couleur est fort, alors que les deux autres sont faibles, le signal fort subit une contre-réaction et est abaissé, et pas les deux autres, ce qui conduit à une désaturation de la couleur. En outre, comme les tensions de cut-off des trois cathodes d'un tube image sont assez dispersées, d'un tube à l'autre, et qu'il est d'usage de régler les trois circuits d'amplification un par un pour les adapter chacun à la tension de cut-off de la cathode correspondante, cela entraîne des écarts imprévisibles entre le point de déclenchement de la contre-réaction et le point de cut-off, d'un appareil à l'autre.

Un objet de l'invention est de remédier à ces inconvénients.

A cet effet, la valeur de référence du seuil établie par le circuit de définition commun est appliquée à un agencement qui engendre, à partir de la valeur de référence du seuil, plusieurs tensions différentes les unes des autres, de façon à fournir une contre-réaction différente à chacun des circuits d'amplification.

L'invention est donc basée sur l'idée, d'assurer à chacun des différents circuits d'amplification une contre-réaction différente, en appliquant néanmoins la contre-réaction en même temps aux différents circuits d'amplification.

Avantageusement, un circuit d'amplification comprend un transistor bipolaire monté selon le montage dit émetteur commun, dont l'émetteur est en outre relié à une source de tension fixe par une résistance de contre-réaction faite d'au moins, en cascade, une première résistance reliée à l'émetteur et une seconde résistance reliée à la source de tension fixe, et une tension de référence de seuil est appliquée via une diode au point de liaison entre les première et seconde résistances.

Ainsi, la réalisation d'un circuit d'amplification, qui compresse et écrête le signal de la manière désirée, est particulièrement simple.

De préférence, l'agencement, qui engendre plusieurs tensions différentes les unes des autres, est un diviseur à résistances en cascade, en tête duquel une tension de référence est appliquée via une diode, et dont les résistances constituent en outre les susdites secondes résistances des circuits d'amplification.

Ainsi, deux fonctions sont judicieusement combinées, puisque les résistances du diviseur ont une double fonction, elles constituent à la fois un diviseur de tension et les secondes résistances des circuits d'amplification.

Dans un amplificateur, qui contient trois circuits d'amplification, respectivement pour les couleurs rouge, vert, et bleu, le circuit d'amplification du rouge est avantageusement connecté en tête du diviseur, le circuit d'amplification du vert est connecté plus bas dans le diviseur, et le circuit d'amplification du bleu, encore plus bas.

Un appareil d'affichage d'images est avantageusement équipé d'un amplificateur vidéo selon l'invention exposée ci-dessus.

Ces aspects de l'invention ainsi que d'autres aspects plus détaillés apparaîtront plus clairement grâce à la description suivante d'un mode de réalisation constituant un exemple non limitatif.

La figure unique est un schéma d'un amplificateur vidéo selon l'invention.

Un appareil d'affichage d'images reçoit des signaux qui peuvent se présenter de plusieurs manières : avec des porteuses dans différentes gammes de fréquences, des types de modulation différents, etc. Néanmoins, après démodulation appropriée, chacune des couleurs d'une image à afficher est définie par un signal de couleur spécifique. En général trois couleurs de base sont définies, le rouge, le vert, et le bleu. On parlera de "signal rouge", "signal vert", "signal bleu".

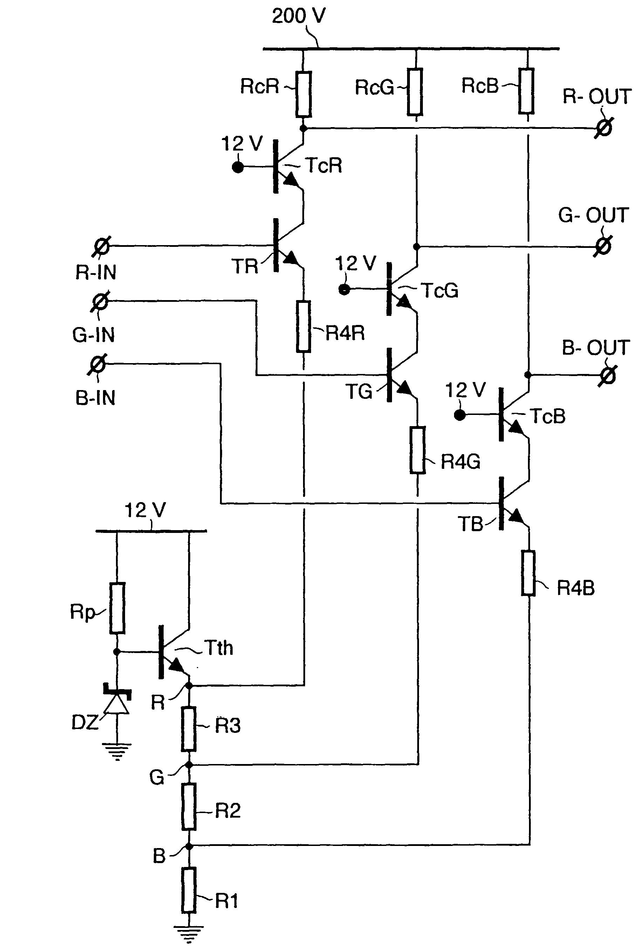

L'amplificateur représenté par la figure 1 comprend donc, pour chacun des signaux rouge, vert, et bleu, un circuit d'amplification avec une entrée respectivement R-IN, G-IN, B-IN, destinée à recevoir un signal de couleur, et une sortie, respectivement R-OUT, G-OUT, B-OUT, pour délivrer un signal de couleur. Chaque circuit d'amplification comprend un montage cascode fait d'un premier transistor bipolaire, respectivement TcR, TcG, TcB, et d'un second transistor bipolaire, respectivement TR, TG, TB. Le collecteur du premier transistor est relié d'une part à une sortie respectivement R-OUT, G-OUT, B-OUT, et d'autre part, via une résistance de charge respectivement RcR, RcG, RcB, à une source de tension d'alimentation 200V, par exemple de 200 volts, et sa base est reliée à une source de tension 12 V, par exemple de 12 volts. Les résistances RcR, RcG, RcB sont égales entre elles, pour une raison de puissance dissipée. Le second transistor est monté avec sa base reliée respectivement aux entrées R-IN, G-IN, B-IN, et son collecteur relié à l'émetteur du premier transistor correspondant. Les sorties R-OUT, G-OUT, B-OUT sont destinées à être reliées, de manière connue, par exemple aux cathodes d'un tube écran non représenté. L'émetteur d'un second transistor TR, TG, TB, est relié à une première résistance, respectivement R4R, R4G, R4B. Cette première résistance est elle même connectée à une seconde résistance reliée à une source de tension fixe qui est ici la masse, cette seconde résistance étant respectivement constituée par R3+R2+R1 pour le transistor TR, par R2+R1 pour le transistor TG, et par R1 seule pour le transistor TB. Les ensembles faits respectivement des résistances R4R + [R3+R2+R1] pour le rouge, R4G + [R2+R1] pour le vert, et R4B + R1 pour le bleu, constituent des résistances de contre-réaction.

Un circuit dit de définition, commun pour l'ensemble des couleurs, pour établir une valeur de référence du seuil, est constitué par les éléments DZ, Rp et Tth. Une tension de référence est définie par une diode zener DZ, dont l'anode est reliée ici à la masse, et dans laquelle un courant est introduit à partir d'une source de tension d'alimentation 12V de 12 volts via une résistance Rp. Cette tension de référence est reprise par un transistor bipolaire Tth monté selon le montage dit émetteur suiveur, dont la base est reliée à la diode DZ et qui comprend, en série entre son émetteur et la masse, les trois résistances R3, R2, R1. A partir de la tension de référence, par division de la tension prélevée sur l'émetteur du transistor Tth, l'agencement des résistances R3, R2, R1 fournit ainsi plusieurs tensions différentes, aux différents points de liaison : entre R4R et R3+R2+R1, entre R4G et R2+R1, entre R4B et R1, de façon que chacun des circuits d'amplification voie une tension de seuil différente, de plus en plus grande pour successivement le bleu, le vert, et le rouge.

Néanmoins la tension de seuil est appliquée, à chacun des points de liaison, seulement lorsque la diode base-émetteur du transistor Tth est conductrice. Ceci est le cas, tant que la tension en un des susdits points de liaison n'atteint pas la tension de seuil. Le fonctionnement est le suivant, par exemple pour le circuit d'amplification "rouge" : si la tension au point de liaison R, due au signal rouge dans le circuit d'amplification TR/TcR, est inférieure à la tension définie par DZ moins la tension base-émetteur de Tth, cette diode est conductrice, la partie [R1+R2+R3] de la résistance de contre-réaction est court-circuitée par la diode, et seule la résistance R4R est en jeu. Lorsque la tension au point de liaison R, due au signal rouge dans le circuit d'amplification TR/TcR, atteint la tension de seuil, la diode base-émetteur de Tth se bloque, et la partie [R1+R2+R3] de la résistance de contre-réaction entre en jeu, en série avec R4R. De ce fait la contre-réaction prend une valeur plus élevée. Le fonctionnement s'explique de la même façon dans le cas des deux autres circuits d'amplification, avec la différence que la tension de seuil est différente pour chaque circuit d'amplification, du fait quelle est modifiée par le diviseur R1, R2, R3.

Le montage a entre autres l'effet qu'une couleur peut en influencer une autre, puisque, par exemple, un courant induit dans la résistance R1 par le courant du transistor TR (rouge) modifie la tension au point de liaison B, donc agit sur le courant du transistor TB (bleu). Toutefois ceci n'est pas un inconvénient car l'effet qui en résulte se limite à une légère augmentation de la saturation, sans réelle altération des couleurs.

Un montage qui a donné satisfaction comporte des transistors du modèle BF869 pour les transistors TcR, TcG, TcB, des transistors du modèle BC858 pour les transistors TR, TG, TB, des résistances de 150 Ω pour R4R, R4G, R4B, des résistances de 10 kΩ pour RcR, RcG, RcB, et des résistances de 39 Ω, 15 Ω, 4,7 Ω pour respectivement R1, R2, R3. La diode zener DZ est un modèle 2 volts. Il convient d'adapter légèrement certaines des valeurs selon le tube écran employé.

On sait que, avec les tubes écran connus, les niveaux des signaux de couleur appliqués au tube doivent être différents pour les trois couleurs. On a supposé que ces niveaux avaient été ajustés par un moyen connu, avant d'être appliqués à l'amplificateur. Ceci a son importance, car la valeur adéquate du seuil, pour lequel la valeur de contre-réaction prend une valeur plus élevée, dépend du niveau atteint par les signaux, qui diffère selon leur plus ou moins grande amplification préalable. Dans une variante de réalisation, les niveaux pourraient aussi être ajustés dans l'amplificateur lui même, en donnant aux résistances R4R, R4G, R4B des valeurs différentes, c'est-à-dire en donnant aux trois circuits d'amplification des taux de contre-réaction différents. Dans ce cas, il est clair que le rapport de division du diviseur R1, R2, R3 doit être adapté en conséquence, les valeurs adéquates pouvant être déterminées au moyen d'essais de routine.

## Revendications

1. Amplificateur vidéo pour un appareil d'affichage d'images définies par des signaux de couleur, comprenant, pour chacun des signaux de couleur, un circuit d'amplification dont le gain est limité par une contre-réaction qui prend une valeur plus élevée lorsque la tension du signal dépasse une tension de seuil donnée, et un circuit dit de définition, commun pour l'ensemble des couleurs, pour établir une valeur de référence du seuil, **caractérisé en ce que** la valeur de référence du seuil établie par le circuit de définition commun est appliquée à un agencement qui engendre, à partir de la valeur de référence du seuil, plusieurs tensions différentes les unes des autres, de façon à fournir une contre-réaction différente à chacun des circuits d'amplification.

2. Amplificateur vidéo selon la revendication 1, **caractérisé en ce que** un circuit d'amplification comprend un transistor bipolaire monté selon le montage dit émetteur commun, dont l'émetteur est en outre relié à une source de tension fixe par une résistance de contre-réaction faite d'au moins, en cascade, une première résistance reliée à l'émetteur et une seconde résistance reliée à la source de tension fixe, et une tension de référence de seuil est appliquée via une diode au point de liaison entre les première et seconde résistances.

3. Amplificateur vidéo selon la revendication 2, **caractérisé en ce que** l'agencement, qui engendre plusieurs tensions différentes les unes des autres, est un diviseur à résistances en cascade, en tête duquel une tension de référence est appliquée via une diode, et dont les résistances constituent en outre les susdites secondes résistances des circuits d'amplification.

4. Amplificateur vidéo selon la revendication 3, qui contient trois circuits d'amplification, respectivement pour les couleurs rouge, vert, et bleu, **caractérisé en ce que** le circuit d'amplification du rouge est connecté en tête du diviseur, le circuit d'amplification du vert est connecté plus bas dans le diviseur, et le circuit d'amplification du bleu, encore plus bas.

5. Amplificateur vidéo selon la revendication 1, **caractérisé en ce que** l'agencement, qui engendre plusieurs tensions différentes les unes des autres, est alimenté par l'émetteur d'un transistor bipolaire monté selon le montage dit émetteur suiveur, dont la base est reliée à une source de tension fixe.

6. Appareil d'affichage d'images, **caractérisé en ce que** il est équipé d'un amplificateur vidéo selon l'une quelconque des revendication 1 à 4.

## Patentansprüche

1. Videoverstärker für ein über Farbsignale definiertes Bildanzeigegerät, mit für jedes der Farbsignale einer Verstärkerschaltung, deren Leistung durch eine Gegenreaktion begrenzt ist, die einen höheren Wert annimmt, wenn die Signalspannung eine gegebene Grenzspannung übersteigt, und einer sogenannten Definitionsschaltung, gemeinsam für die gesamten Farben, um einen Bezugsgrenzwert aufzustellen, dadurch gekennzeichnet, daß der von der Definitionsschaltung aufgestellte gemeinsame Bezugsgrenzwert einer Anordnung zugeführt wird, die anhand des Bezugsgrenzwertes mehrere untereinander unterschiedliche Spannungen erzeugt, um an jeder der Verstärkerschaltungen eine unterschiedliche Gegenreaktion auszulösen.

2. Videoverstärker nach Anspruch 1, dadurch gekennzeichnet, daß eine Verstärkerschaltung einen nach einer sogenannten Emitterschaltung angeordneten Bipolartransistor enthält, dessen Emitter zudem mit einer festen Spannungsquelle verbunden ist, über einen Gegenreaktionswiderstand, in Kaskade mindestens bestehend aus einem ersten Widerstand, mit dem Emitter verbunden, und einem zweiten Widerstand, mit der festen Spannungsquelle verbunden, und eine Bezugsgrenzspannung wird über eine Diode zum Verbindungspunkt zwischen dem ersten und dem zweiten Widerstand zugeführt.

3. Videoverstärker nach Anspruch 2, dadurch gekennzeichnet, daß die Anordnung, die mehrere voneinander unterschiedliche Spannungen erzeugt, ein Widerstandsdivisor in Kaskade ist, dessen Kopf über eine Diode eine Bezugsspannung zugeführt wird, und wobei die Widerstände zudem die oben erwähnten zweiten Widerstände der Verstärkerschaltungen bilden.

4. Videoverstärker nach Anspruch 3, der drei Verstärkerschaltungen enthält, jeweils für die Farben rot, grün und blau, dadurch gekennzeichnet, daß die Verstärkerschaltung des Rots am Kopf des Divisors angeschlossen ist, die Verstärkerschaltung des Grüns mehr danach im Divisor angeschlossen ist und die Verstärkerschaltung des Blaus noch weiter danach.

5. Videoverstärker nach Anspruch 1, dadurch gekennzeichnet, daß die Anordnung, die nacheinander mehrere verschiedene Spannungen erzeugt, von einem nach einer sogenannten Emitterfolgerschaltung geschalteten Bipolartransistor versorgt wird, dessen Basis mit einer festen Spannungsquelle verbunden ist.

6. Bildanzeigegerät, dadurch gekennzeichnet, daß es mit einem Videoverstärker nach einem beliebigen der Ansprüche 1 bis 4 ausgerüstet ist.

## Claims

1. A video amplifier for an image display device, which images are defined by color signals, comprising, for each color signal, an amplifier circuit having a gain which is limited by a feedback assuming a higher value when the signal voltage exceeds a given threshold voltage, and a circuit called definition circuit, which is common for the assembly of colors, for establishing a threshold reference value, characterized in that the threshold reference value established by the common definition circuit is applied to an arrangement generating, on the basis of the threshold reference value, several mutually different voltages so as to provide a different feedback for each amplifier circuit.

2. A video amplifier as claimed in claim 1, characterized in that an amplifier circuit comprises a bipolar transistor arranged in a common emitter configuration, in which the emitter is also connected to a fixed voltage source by means of a feedback resistor consisting of a cascade arrangement of at least a first resistor connected to the emitter and a second resistor connected to the fixed voltage source, and a threshold reference voltage is applied via a diode to the junction point between the first and the second resistor.

3. A video amplifier as claimed in claim 2, characterized in that the arrangement which generates several mutually different voltages is a divider comprising cascade-arranged resistors, at the head of which a reference voltage is applied via a diode, and in which the resistors also constitute said second resistors of the amplifier circuits.

4. A video amplifier as claimed in claim 3, which comprises three amplifier circuits for the red, green and blue colors, respectively, characterized in that the amplifier circuit for the red signal is connected at the head of the divider, the amplifier circuit for the green signal is connected at a lower point in the divider and the amplifier circuit for the blue signal is connected at an even lower point.

5. A video amplifier as claimed in claim 1, characterized in that the arrangement, which generates several mutually different voltages, is fed by the emitter of a bipolar transistor arranged in an emitter-follower configuration, in which the base is connected to a fixed voltage source.

6. An image display device, characterized in that said device is provided with a video amplifier as claimed in any one of claims 1 to 4.
